# EUROPÄISCHE PATENTSCHRIFT

(11) **EP 0 417 410 B1**
(45) Veröffentlichungstag und Bekanntmachung des Hinweises auf die Patenterteilung: **31.01.1996**
(21) Anmeldenummer: 90112009.7
(22) Anmeldetag: 25.06.1990
(51) Int. Cl.: C07F 9/655, C07F 9/40, C07F 9/32

(54) **Alkenyl-phosphon- und -phosphin-säureester, Verfahren zu ihrer Herstellung, ihre Verwendung sowie unter deren Verwendung hergestellte Hydrogele**
Alkenyl-phosphonic- and phosphinic acid esters, process for their preparation, there use and prepared hydrogels using them
Phosphonates et phosphinates d'alkényles, leur procédé de préparation, leur utilisation ainsi que les hydrogels préparés en les utilisant

(30) Priorität: 07.07.1989 DE 3922327
(43) Veröffentlichungstag der Anmeldung: 20.03.1991
(73) Patentinhaber: HOECHST AKTIENGESELLSCHAFT, D-65926 Frankfurt am Main (DE)
(72) Erfinder: Engelhardt, Friedrich, Dr., D-6000 Frankfurt am Main 61 (DE); Riegel, Ulrich, D-6000 Frankfurt am Main 61 (DE); Gersdorf, Joachim, Dr., D-6200 Wiesbaden (DE); Kleiner, Hans-Jerg, Dr., D-6242 Kronberg (DE)

(56) Entgegenhaltungen:
- EP-A- 0 019 187
- EP-A- 0 327 092
- EP-A- 0 329 595
- EP-A- 0 343 427
- AU-A- 62 282
- DE-A- 1 243 192

## Beschreibung

Die Erfindung betrifft neue Alkenyl-phosphon- und -phosphin-säureester mehrwertiger Alkohole Verfahren zu ihrer Herstellung, ihre Verwendung sowie unter deren Verwendung hergestellte Hydrogele.

Bei der Herstellung von Hydrogelen in wäßriger Lösung werden als Vernetzer üblicherweise Verbindungen wie Bisacrylamidoessigsäure, Trimethylolpropantriacrylat, Tetraallyloxyethan oder ähnliche eingesetzt.

Des weiteren sind in der Deutschen patentanmeldung P 38 17 425-1 Alkenyl-phosphon- und -phosphin-säureester von 1, 1, 1-Tris(hydroxymethyl)alkanen und von 2,2-Bis-hydroxymethyl-1,3-propandiol beschrieben.

In der DE-B 1 243 192 sind Vinylphosphonate beschrieben, die als Insektizide, Fungizide, als Weichmacher für plastische Massen oder als Antistatika für Kunststoffe Verwendung finden. Alkenylphosphonate sind darüber hinaus auch in der AU-A 62 282 beschrieben, die als Benetzungs- und Suspendierungsmittel oder als Brandschutzmittel eingesetzt werden können.

Aufgabe vorliegender Erfindung ist es, neue, wasserlösliche, als Vernetzer wirkende polymerisierbare Verbindungen bereitzustellen, durch deren Verwendung Hydrogele mit verbesserten Eigenschaften hinsichtlich Gelstärke und Wasserrückhaltevermögen erhalten werden.

Diese Aufgabe wird überraschenderweise gelöst durch die Verbindungen der allgemeinen Formel I 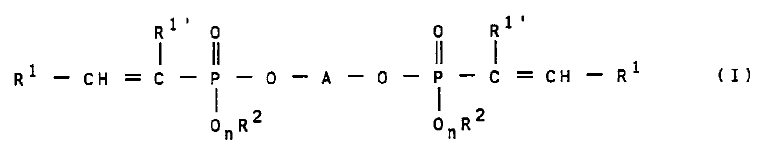 worin
R1 und R¹' unabhängig voneinander Wasserstoff oder (C₁-C₄)-Alkyl,
R² (C₁-C₄)-Alkyl;
n 0 oder 1 und
A eine Gruppe der Formel IV 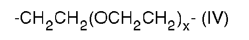 worin x 1 bis 12 ist
oder eine Gruppe der Formel V 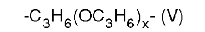 worin x 1 bis 12 ist, bedeuten.
R¹ und R¹' bedeuten bevorzugt Wasserstoff oder Methyl.
R² bedeutet bevorzugt Methyl, Ethyl oder Propyl.
Eine für A stehende Alkylengruppe hat bevorzugt 3 bis 8 Kohlenstoffatome.

A steht bevorzugt für die von Diethylenglykol, Triethylenglykol und Dipropylenglykol abgeleiteten Reste.

Die erfindungsgemäßen Verbindungen der allgemeinen Formel sowie weitere Verbindungen der allgemeinen Formel l finden Verwendung als sogenannte Vernetzer, das heißt als polymerisierbare, mehrfach ungesättigte Monomere, bei der Synthese von Polymeren, insbesondere von wasserquellbaren Hydrogelen aus ungesättigten Monomeren. Ein wesentlicher Vorteil ist dabei deren sehr gute Löslichkeit sowohl in polaren als auch in unpolaren Lösungsmitteln. So sind die Verbindungen der allgemeinen Formel l im Gegensatz zu Trimethylolpropantriacrylat oder Trimethylolpropantrimethacrylat in jedem Verhältnis mit Wasser mischbar. Es handelt sich darüber hinaus um schwerflüchtige, geruchsarme Substanzen. Daraus resultiert als weiterer Vorteil eine wesentlich verringerte Neigung zur Diffusion oder Verdunstung während des Polymerisationsprozesses.

Die vorliegende Erfindung betrifft somit auch die Verwendung der Verbindungen der allgemeinen Formel l 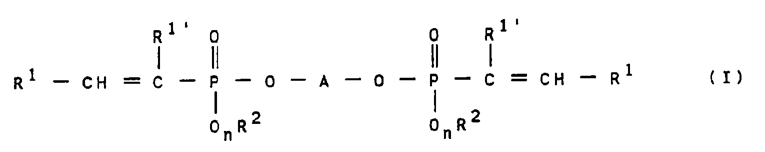 worin
R¹ und R¹' unabhängig voneinander Wasserstoff oder (C₁-C₄)-Alkyl,
R² (C₁-C₄)-Alkyl,
n 0 oder 1 und
A geradkettiges oder verzweigtes (C₂-C₁₂)-Alkylen, oder eine Gruppe der Formel II 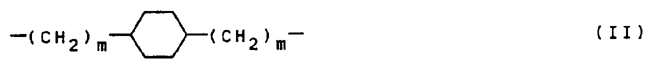 worin m 0 oder 1 ist,
oder eine Gruppe der Formel III 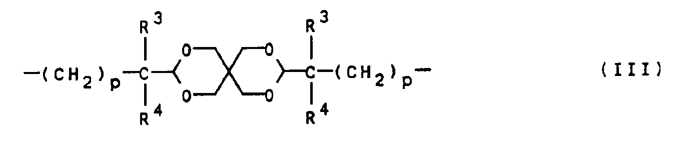 worin R³ und R⁴ unabhängig voneinander (C₁-C₄)-Alkyl bedeuten und p 0 oder 1 ist, oder eine Gruppe der Formel IV 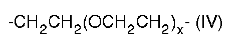 worin x 1 bis 12 ist,
oder eine Gruppe der Formel V 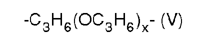 worin x 1 bis 12 ist,
oder eine Gruppe der Formel VI 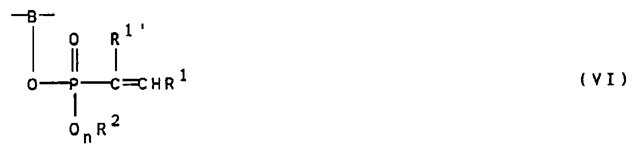 worin B für geradkettiges oder verzweigtes (C₃-C₁₂)-Alkylen steht, wobei verzweigtes C₆-Alkylen ausgeschlossen ist, falls R¹ und R¹' für Wasserstoff stehen und worin R¹, R¹', R² und n wie oben angegeben definiert sind, bedeuten, als Vernetzer bei der Synthese von Polymeren aus ungesättigten Monomeren

Die Verbindungen der allgemeinen Formel können hergestellt werden durch Umsetzung eines Alkenylphosphonsäureesterchlorids der allgemeinen Formel VII 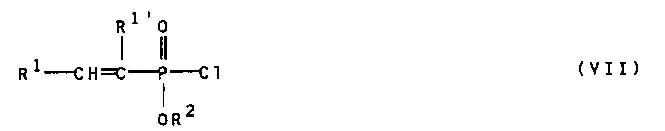 oder eines Alkenylphosphinsäurechlorids der allgemeinen Formel VIII 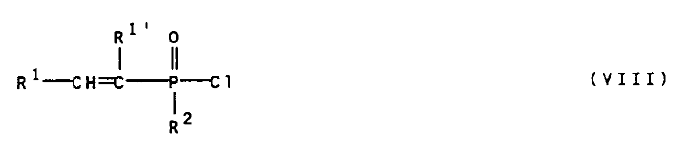 worin R¹, R¹' und R² wie oben angegeben definiert sind, mit einem Alkohol der allgemeinen Formel IX HO-A-OH (IX) oder mit einem Alkohol der allgemeinen Formel X 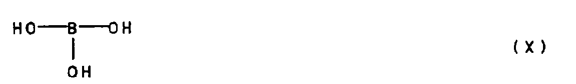 worin A und B wie oben definiert sind.

Um bei der Reaktion freiwerdenden Chlorwassertoff zu binden, werden bevorzugt geeignete tertiäre Amine als Säurefänger eingesetzt.

Geeignete tertiäre Amine sind beispielsweise Trialkylamine mit 1 bis 4 Kohlenstoffatomen pro Alkylrest, wie z.B. Triethylamin, Dialkylaniline mit 1 bis 4 Kohlenstoffatomen im Alkylrest, wie z.B. N;N'-Dimethylanilin und Pyridin.

Bevorzugterweise werden die Umsetzungen mit Molverhältnissen phosphororganische Verbindung : Säurefänger: Alkohol der allgemeinen Formel IX von 2:2:1 beziehungsweise phosphororganische Verbindung : Säurefänger : Alkohol der allgemeinen Formel X von 3:3:1 ausgeführt.

Die Umsetzungen werden vorzugsweise unter Kühlung bei -10 bis +40°C in geeigneten inerten Lösungsmitteln ausgeführt.

Geeignete inerte Lösungsmittel sind beispielsweise halogenierte Kohlenwasserstoffe, wie z.B. Methylenchlorid, aromatische Kohlenwasserstoffe, wie z.B. Toluol, Ether, wie z B. Tetrahydrofuran oder aliphatische Nitrile, wie z B. Acetonitril.

Die bei den angegebenen Verfahren anfallenden Produkte können zum Teil durch Destillation, insbesondere mit Hilfe eines Dünnschichtverdampfers, im Hochvakuum gereinigt werden. Teilweise können sie aber auch direkt als Rohprodukt weiterverarbeitet werden.

Die Alkohole der allgemeinen Formeln IX und X sind bekannt und sind käuflich oder können nach bekannten Methoden hergestellt werden. Zweiwertige Alkohole der allgemeinen Formel IX sind beispielsweise Propandiol-1,3, Butandiol-1,4, Hexandiol-1,6, Hexandiol-2,5, 2,2-Dimethyl-1,3-propandiol, 2-Methyl-2,4-pentandiol, Cyclohexan-1,4-diol, Diethylenglykol, Triethylenglykol und Dipropylenglykol.

Alkohole der allgemeinen Formel IX, die eine Gruppe der Formel III in die erfindungsgemäßen Verbindungen einführen, sind beispielsweise in der DE 11 51 813 beschrieben. Dreiwertige Alkohole der allgemeinen Formel X sind beispielsweise Glycerin und Hexantriol-1, 2, 6.

Die phosphororganischen Verbindungen der allgemeinen Formeln VII und VIII sind käuflich oder nach gängigen Methoden zugänglich (z.B. Houben-Weyl, Methoden der Organischen Chemie, Georg Thieme Verlag, Stuttgart, Bd. 12/1, 1963 Seiten 217 ff und 338 ff).

Eine bevorzugte Verbindung der allgemeinen Formel VII ist Vinylphosphonsäureethylesterchlorid, eine solche der allgemeinen Formel VIII Methylvinylphosphinsäurechlorid. Gegenstand vorliegender Erfindung sind auch durch Copolymerisation hydrophiler Monomere herstellbare wasserquellbare Hydrogele, dadurch gekennzeichnet, daß bei der Copolymerisation Verbindungen der allgemeinen Formel I 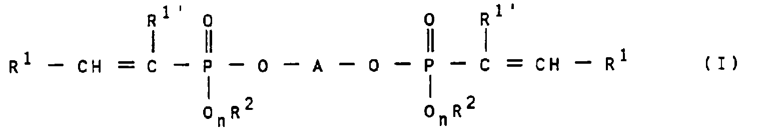 worin
R¹ und R¹' unabhängig voneinander Wasserstoff oder (C₁-C₄)-Alkyl,
R² (C₁-C₄)-Alkyl;
n 0 oder 1 und
A geradkettiges oder verzweigtes (C₂-C₁₂)-Alkylen, oder eine Gruppe der Formel I 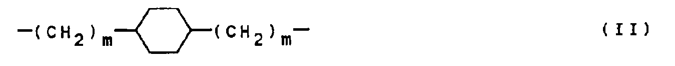 worin m 0 oder 1 ist,
oder eine Gruppe der Formel III 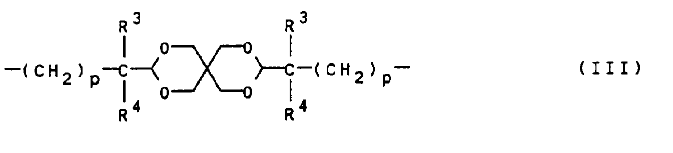 worin R³ und R⁴ unabhängig voneinander (C₁-C₄)-Alkyl bedeuten und p 0 oder 1 ist, oder eine Gruppe der Formel IV 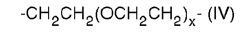 worin x 1 bis 12 ist,
oder eine Gruppe der Formel V 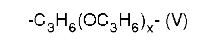 worin x 1 bis 12 ist,
oder eine Gruppe der Formel VI 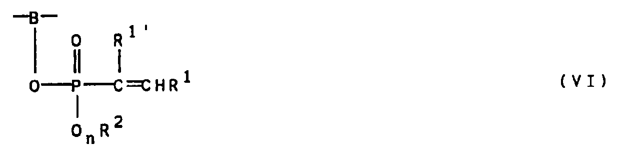 worin B für geradkettiges oder verzweigtes (C₃-C₁₂)-Alkylen steht, wobei verzweigtes C₆-Alkylen ausgeschlossen ist, falls R¹ und R¹' für Wasserstoff stehen und worin R¹, R¹', R² und n wie oben angegeben definiert sind, bedeuten, als Vernetzer eingesetzt werden.

Als hydrophile Monomere kommen insbesondere Acrylsäure, Methacrylsäure, Crotonsäure, 2-Acrylamido-2-me- thylpropansulfonsäure und -phosphonsäure, Vinylphosphonsäure, Vinylphosphonsäurehalbester, deren Salze, Acrylamid, N-Vinylamide oder Gemische davon in Frage. Bevorzugt sind Acrylsäure und deren Salze.

Die Verbindungen der allgemeinen Formel werden vorzugsweise in Mengen von 0,05 bis 20 Gew.%, bezogen auf das Gesamtmonomerengewicht, eingesetzt.

Die Polymerisation kann in homogener Phase z.B. in wäßriger Lösung als sog. Gelpolymerisation oder nach dem Verfahren der Inversemulsionspolymerisation durchgeführt werden. Eine weitere Möglichkeit zur Synthese der erfindungsgemäßen Hydrogele bietet die Fällungspolymerisation aus organischen Lösungsmitteln, wie zum Beispiel Alkoholen, bevorzugt tert. Butanol, oder Kohlenwasserstoffen wie Hexan oder Cyclohexan.

Die Polymerisation kann durch Radikalbildner wie zum Beispiel organische oder anorganische Peroxide sowie Azoverbindungen ausgelöst werden. Beispiele sind Benzoylperoxid, tert. Butylhydroperoxid, Cumolhydroperoxid, (NH₄)₂S₂O₈, K₂S₂0₈, H₂0₂ oder Azo-diisobutyronitril. Auch Redoxsysteme eignen sich in hervorragender Weise als Polymerisationsinitiatoren.

Die Polymerisation kann schließlich auch durch energiereiche Strahlung ausgelöst werden.

Die erfindungsgemäßen Hydrogele eignen sich in hervorragender Weise als Absorbentien für wäßrige Flüssigkeiten und zur Formulierung kosmetischer Zubereitungen

Besonders vorteilhaft verhalten sich Copolymere aus Acrylsäure und den erfindungsgemäßen Verbindungen der allgemeinen Formel 1 als sogenannte super absorbing polymers (SAP) beim Einsatz in Hygieneartikeln, wie z.B. Windeln, wobei die Acrylsäure teilweise als Alkali- oder Ammoniumsalz vorliegen kann. Die Neutralisation kann sowohl vor als auch nach der Polymerisation erfolgen.

Die erfindungsgemäßen wasserquellbaren Hydrogele zeichnen sich gegenüber den Verbindungen des Standes der Technik durch eine homogenere Netzwerkstruktur aus, da die erfindungsgemäßen Verbindungen der allgemeinen Formel 1 sowohl in Wasser als auch in polaren organischen Lösungsmitteln völlig löslich sind. Dadurch weisen die Hydrogele hohe Absorptionskapazitäten neben hoher Gelstärke auf.

Die folgenden Beispiele 1 bis 9 erläutern die vorliegende Erfindung bezüglich der Verbindungen der allgemeinen Formel die Beispiele 10 bis 30 bezüglich der Hydrogele.

### Beispiel 1

### Umsetzung von Methyl-vinylphosphinsäurechlorid mit Butandiol-1,4

36 g (0,4 mol) Butandiol-1,4 wurden zusammen mit 81 g (0,8 mol) Triethylamin in 270 ml Toluol gegeben. Unter lebhaftem Rühren wurden 99,6 g (0,8 mol) Methyl-vinylphosphinsäurechlorid unter Kühlung bei 20-25°C zugetropft. Dann wurde 20 Stunden nachgerührt und anschließend das gebildete Triethylaminhydrochlorid abgesaugt. Es wurde mit Toluol gewaschen und das Filtrat durch Destillation im Vakuum vom Toluol befreit. Der Rückstand wurde bei 0,093 kPa und einer Badtemperatur von 190°C über einen Dünnschichtverdampfer destilliert. Man erhielt 92 g.
n20 : 1,4805. Die Ausbeute betrug 87% d.Th.
C₁₀H₂₀O₄P₂ (266)

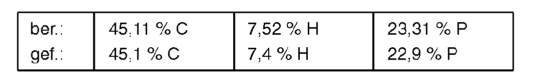

### Beispiel 2

### Umsetzung von Methyl-vinylphosphinsäurechlorid mit Hexandiol-1,6

59,1 g (0,5 mol) Hexandiol-1,6 wurden zusammen mit 101 g (1 mol) Triethylamin in 200 ml Toluol gegeben. Unter lebhaftem Rühren wurden 124,5 g (1 mol) Methyl-vinylphosphinsäurechlorid unter Kühlung bei 20°C zugetropft. Dann wurde 18 Stunden nachgerührt und anschließend das gebildete Triethylaminhydrochlorid abgesaugt, Es wurde mit Toluol gewaschen und das Filtrat durch Destillation im Vakuum vom Toluol befreit. Der Rückstand wurde bei 0,067 kPa und einer Badtemperatur von 205°C über einen Dünnschichtverdampfer destilliert. Man erhielt 135 g.
n20 : 1, 4819. Die Ausbeute betrug 92% d.Th.
^{C}₁₂^{H}₂₄0₄P₂ (294)

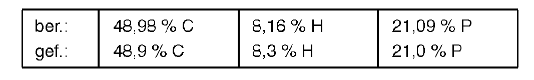

### Beispiel 3

### Umsetzung von Methyl-vinylphosphinsäurechlorid mit Hexandiol-2,5

59,1 g (0,5 mol) Hexandiol-2,5 wurden zusammen mit 101 g (1 mol) Triethylamin in 200 ml Toluol gegeben. Unter lebhaftem Rühren wurden 124,5 g (1 mol) Methyl-vinylphosphinsäurechlorid unter Kühlung bei 20°C zugetropft. Dann wurde 18 Stunden nachgerührt und anschließend das gebildete Triethylaminhydrochlorid abgesaugt. Es wurde mit Toluol gewaschen und das Filtrat durch Destillation im Vakuum vom Toluol befreit. Der Rückstand wurde bei 0,2 kPa und einer Badtemperaturvon 200°C über einen Dünnschichtverdampfer destilliert. Man erhielt 130 g. Das anfallende Produkt hatte die Säurezahl 44. Es stellte ein Rohprodukt dar. Die Ausbeute betrug 92% d.Th.
C₁₂H₂₄O₄P₂ (294)

### Beispiel 4

### Umsetzung von Methyl-vinylphosphinsäurechlorid mit 2,2-Dimethyl-propandiol-1,3

15,6 g (0,15 mol) 2,2-Dimethylpropandiol-1,3 wurden zusammen mit 30,4 g (0,3 mol) Triethylamin in 75 ml Toluol gegeben. Unter lebhaftem Rühren wurden 37,35 g (0,3 mol) Methyl-vinylphosphinsäurechlorid unter Kühlung bei 20-25°C zugetropft. Dann wurde nachgerührt und anschließend das gebildete Triethylaminhydrochlorid abgesaugt. Es wurde mit Toluol gewaschen und Filtrat im Vakuum vom Toluol befreit. Es verblieben 40 g. Das anfallende Produkt hatte die Säurezahl 49. Es stellte ein Rohprodukt dar. Die Ausbeute betrug 97% d.Th.
C₁₁H₁₆O₄P₂ (274)

### Beispiel 5

### Umsetzung von Methyl-vinylphosphinsäurechlorid mit Cyclohexandiol-1,4

23,2 g (0,2 mol) Cyclohexandiol-1,4 wurden zusammen mit 40,5 g (0,4 mol) Triethylamin in 90 ml Toluol gegeben. Unter lebhaftem Rühren wurden 49,8 g (0,4 mol) Methyl-vinylphosphinsäurechlorid unter Kühlung bei 20°C zugetropft. Nach dem Nachrühren wurde das gebildete Triethylaminhydrochlorid abgesaugt. Es wurde mit Toluol gewaschen und das Filtrat durch Destillation im Vakuum vom Toluol befreit. Der Rückstand kristallisierte. Durch Digerieren mit Ethylmethylketon wurde das Produkt gewonnen. Schmelzpunkt: 80 bis 82°C.
^{C}₁₂^{H}₂₂0₄P₂ (292)

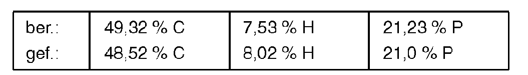

### Beispiel 6

### Umsetzung von Methyl-vinylphosphinsäurechlorid mit Triethylenglykol

37,6 g (0,25 mol) Triethylenglykol wurden zusammen mit 50,6 g (0,5 mol) Triethylamin in 100 ml Toluol gegeben. Unter lebhaftem Rühren wurden 62,25 g (0,5 mol) Methyl-vinylphosphinsäurechlorid unter Kühlung bei 20°C zugetropft. Nach dem Nachrühren wurde das gebildete Triethylaminhydrochlorid abgesaugt. Es wurde mit Toluol gewaschen und das Filtrat durch Destillation im Vakuum vom Toluol befreit. Der Rückstand wurde bei 0,027 kPa und einer Badtemperatur von 240 bis 245°C über einen Dünnschichtverdampfer destilliert. Man erhielt 65 g.
n20 : 1, 4843. Die Ausbeute betrug 80% d.Th.
C₁₂H₂₄O₆P₂ (326)

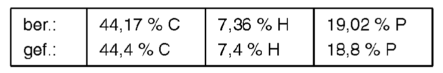

### Beispiel 7 (Isomerenaemisch)

### Umsetzung von Methyl-vinylphosphinsäurechlorid mit Dipropylenglykol (Isomerengemisch)

33,6 g (0,25 mol) Dipropylenglykol (Isomerengemisch) wurden zusammen mit 50,6 g (0,5 mol) Triethylamin mit 100 ml Toluol gegeben. Unter lebhaftem Rühren wurden 62,25 g (0,5 mol) Methyl-vinylphosphinsäurechlorid unter Kühlung bei 20°C während 1,5 Std. zugetropft. 18 Std. wurde nachgerührt. Dann wurde das gebildete Triethylaminhydrochlorid abgesaugt. Es wurde mit Toluol gewaschen und das Filtrat durch Destillation im Vakuum vom Toluol befreit. Man erhielt 77,5 g als Rohprodukt.
n²⁰ : 1, 4768.

Eine Reinigung durch Destillation mit Hilfe eines Dünnschichtverdampfers bei einer Badtemperatur von ca. 220°C und 0,027 kPa war möglich. Die Ausbeute betrug 100% d.Th.
C₁₂H₂₄O₅P₂ (310)

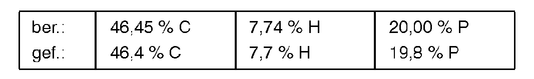

### Beispiel 8

### Umsetzung von Vinylphosphonsäureethylesterchltarid mit Hexandiol-1,6

28,6 g (0,242 mol) Hexandiol-1,6 wurden zusammen mit 49 g (0,484 mol) Triethylamin in 100 ml Toluol gegeben. Unter lebhaftem Rühren wurden 74,9 g (0,484 mol) Methyl-vinylphosphonsäureethylesterchlorid unter Kühlung bei 20°C zugetropft. Nach dem Nachrühren wurde das ausgebildete Triethylaminhydrochlorid abgesaugt. Es wurde mit Toluol gewaschen und das Filtrat durch Destillation im Vakuum vom Toluol befreit. Man erhielt 84 g. Eine destillative Reinigung mit Hilfe eines Dünnschichtverdampfers bei einer Badtemperatur von 250 bis 260°C und 0,04 kPa war möglich.
n20 : 1, 4623. Die Ausbeute betrug 98% d.Th.
C₁₄H₂₈O₆P₂ (354)

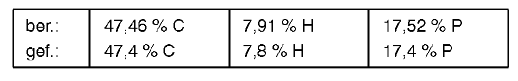

### Beispiel 9

### Umsetzung von Methyl-vinylphosphinsäurechlorid mit Glycerin

9,2 g (0,1 mol) Glycerin wurden zusammen mit 30,4 g (0,3 mol) Triethylamin in 70 ml Acetonitril gegeben. Unter lebhaftem Rühren wurden 37,4 g (0,3 mol) Methyl-vinylphosphinsäurechlorid während 45 Minuten unter Kühlung bei 20 bis 25°C zugetropft. Dann wurde 20 Stunden nachgerührt und anschließend das gebildete Triethylaminhydrochlorid abgesaugt. Es wurde mit eiskaltem Acetonitril gewaschen und das Filtrat durch Destillation im Vakuum vom Acetonitril befreit. Man erhielt 43,5 g, die erneut über eine Fritte gesaugt wurden, um Restmengen an Triethylaminhydrochlorid abzutrennen. Das Filtrat stellte das Rohprodukt dar. Es wies eine Säurezahl von 140 auf.
n²⁰_{D} : 1, 4802.
Es konnte bei einer Badtemperatur von 240°C und 0,107 kPa über einen Dünnschichtverdampfer destilliert werden C12H230SP3 (356)

### Beispiel 10

In einem durch geschäumtes Kunststoffmaterial gut isolierten Polyethylengefäß mit einem Fassungsvermögen von 10 1 werden 5180 g entsalztes Wasser vorgelegt, 1740 g Natriumbicarbonat darin dispergiert und langsam 1985 g Acrylsäure so zudosiert, daß ein Überschäumen der Reaktionslösung vermieden wird, wobei sich diese auf eine Temperatur von ca. 10 - 8°C abkühlt. Es werden nun 15 g der erfindungsgemäßen Verbindung, hergestellt gemäß Beispiel 4, und 10 g eines Natrium-Diisooctylsulfo-succinates (Rewopol V 2133 der Firma REWO, Steinau) zugegeben. Bei einer Temperatur von 1-10°C werden die Initiatoren, ein Redoxsystem, bestehend aus 4,4 g Kaliumperoxidisulfat, gelöst in 170 g Wasser, 2,2 g 2,2-Azobis-amidinopropan-Dihydrochlorid, gelöst in 120 g Wasser, sowie 6,0 g Natriumpyrosulfit, gelöst in 120 g Wasser, nacheinander zugegeben und gut verrührt. Die Reaktionslösung wird daraufhin ohne Rühren stehen gelassen, wobei durch einsetzende Polymerisation, in dessen Verlauf die Temperatur bis auf ca. 85°C ansteigt, ein festes Gel entsteht. Dieses wird anschließend mechanisch zerkleinert, bei Temperaturen über 80° getrocknet und gemahlen

Das vorstehend beschriebene Produkt wurde in herkömmlicher Weise in eine Babywindel eingearbeitet und zeichnete sich hier durch eine besonders gute Flüssigkeitsretention aus.

### Beispiel 11

In einem 10 Liter-Kunststoffgefäß werden 4576 g Eis und 1978 g Acrylsäure vorgelegt und langsam 1642 g NaOH 50%ig zudosiert, anschließend 22 der erfindungsgemäßen Verbindung, hergestellt gemäß Beispiel 2, gelöst in 100 g Wasser und 10 g Rewopol V 2133 zugegeben. Die Reaktionslösung wird auf 20°C eingestellt und anschließend mit den Initiatoren, ein Redoxsystem bestehend aus 6 g Kaliumperoxidisulfat, gelöst in 170 g Wasser, und 0,2 g Ascorbinsäure, gelöst in 120 g Wasser, versetzt und ohne Rühren stehen gelassen. Das durch Polymerisation entstehende Gel wird anschließend mechanisch zerkleinert, bei Temperaturen über 80°C getrocknet und gemahlen.

### Beispiel 12

In einem 10-Liter-Poiyethyiengefäß werden 5250 g entsalztes Wasser, 1988 g Acrylsäure und 12 g der erfindungsgemäßen Verbindung, hergestellt gemäß Beispiel 1, vorgelegt. Nach Einstellen der Reaktionslösung auf 18-20°C werden die Initiatoren, 6 g Kaliumperoxidisulfat in 170 g Wasser und 0,2 g Ascorbinsäure in 20 g Wasser nacheinander zugegeben und das Reaktionsgemisch gut isoliert ohne Rühren stehen gelassen. Nach einsetzender Reaktion steigt die Temperatur bis auf ca. 90°C an, und es entsteht ein festes Gel. Dieses wird mechanisch durch einen Extruder zerkleinert, dem kontinuierlich 1555 g NaOH 50%ig zudosiert werden, wobei teilweise Verdampfung des Wassers erfolgt. Das flockige Polymer wird anschließend bei Temperaturen über 80°C endgetrocknet und gemahlen.

### Beispiel 13

In einen durch geschäumtes Kunststoffmaterial gut isolierten Polyethylengefäß mit einem Fassungsvermögen von 10 1 werden 5280 g entsalztes Wasser vorgelegt, 1740 g Natriumbicarbonat darin dispergiert und langsam 1985 g Acrylsäure so zudosiert, daß ein Überschäumen der Reaktionslösung vermieden wird, wobei sich diese auf eine Temperatur von ca. 10 - 8°C abkühlt. Es werden nun 15 g der erfindungsgemäßen verbindung, hergestellt gemäß Beispiel 6, und 10 g eines Natrium-Diisooctylsulfo-succinates (Rewopol V 2133 der Firma REWO, Steinau) zugegeben. Bei einer Temperatur von 6-8°C werden die Initiatoren, ein Redoxsystem, bestehend aus 2,2 g 2,2'-Azobisamidinopropan-Dihydrochlorid, gelöst in 20 g Wasser, 4,4 g Kaliumperoxidisulfat, gelöst in 170 g Wasser, und 6 g Natriumpyrosulfit, gelöst in 120 g Wasser, nacheinander zugegeben und gut verrührt. Die Reaktionslösung wird daraufhin ohne Rühren stehen gelassen, wobei durch einsetzende Polymerisation, in dessen Verlauf die Temperatur bis auf ca. 85°C ansteigt, ein festes Gel entsteht Dieses wird anschließend mechanisch zerkleinert, bei Temperaturen über 80° getrocknet und gemahlen.

### Beispiel 14

In einem 700 ml Quickfitkolben, der mit einem wandgängigen, u-förmigen Rührer, Thermometer und einem Rückflußkühler versehen ist, werden 300 ml Cyclohexan vorgelegt und 2 g des Schutzkolloids, copolymerisiert aus einem Polybutadienöl und Maleinsäureanhydrid, gelöst. In 10 Minuten wird die Monomerlösung zusammen mit dem Initiator bei 20-25°C zugetropft.

Es werden 58,2 g Acrylsäure, 1,2 g Methacrylsäure in 80 ml destilliertem Wasser gelöst und anschließend unter Eiskühlung mit 49,8 g 50%ige NaOH-Lösung auf einen pH-Wert von 5 bis 5,5 eingestellt Anschließend werden noch 0,6 g der erfindungsgemäßen Verbindung, hergestellt gemäß Beispiel 1, und 3 ml 1 %iger wäßriger (NH₄)₂S₂0₈-Lösung zugegeben.

Dann wird das Ölbad in 50 Minuten auf eine Temperatur von 80°C geheizt, was eine Innentemperatur von 71-72°C ergibt, und mit einer Geschwindigkeit von 180 U/Min gerührt. Die Polymerisation läuft in 75-90 Minuten ab, wobei noch 60 Minuten nachgerührt wird.

Nun wird der Rückflußkühler durch einen Wasserabscheider ausgetauscht und durch Hochheizen des Ölbades auf 140°C innerhalb von 90-95 Minuten 100 ml Wasser abdestilliert.

Die erhaltenen farblosen vernetzten Perlen werden über eine Glasfrittennutsche-G1- abgesaugt, einmal mit 100 ml Aceton gewaschen und bei 50°/200 Torr 30 Minuten getrocknet.

Das vorstehend beschriebene Produkt wurde in herkömmlicher Weise in eine Babywindel eingearbeitet und zeichnete sich hier durch eine besonders gute Flüssigkeitsretention aus.

### Beispiel 15

In einem 1 Liter-Polymerisationskolben aus Glas, versehen mit Rührwerk, Thermometer und Rückflußkühler werden 600 ml Hexan vorgelegt und 98,9 g Acrylsäure sowie 1,1 g der erfindungsgemäßen Verbindung, hergestellt gemäß Beispiel 9, darin gelöst Unter Einleiten eines schwachen N₂-stromes wird mittels eines elektrisch beheizten Wasserbades auf 68°C angeheizt, worauf die Zugabe von 1,0 g Di-Laurylperoxid erfolgt. Nach Einsetzen der Polymerisation tritt deutlicher Rückfluß ein, und das entstandene Polymer flockt aus. Es wird 3 Stunden unter Rückfluß nachgerührt, dann das Polymer abgesaugt und im Trockenschrank bis zur Gewichtskonstanz getrocknet. Man erhält 100 g eines weißen Pulvers, das als saurer Verdicker in kosmetischen Zubereitungen eingesetzt werden kann.

Weitere Beispiele zur Herstellung erfindungsgemäßer Polymerisate gemäß der hier beschriebenen Beispiele 10 bis 15 sind in folgender Tabelle zusammengefaßt. Die Mengenangaben bedeuten Gewichtsprozente, bezogen auf Gesamtmonomeranteil.

Folgende Abkürzungen werden benutzt:
AS: Acrylsäure
MAS: Methacrylsäure
CTS: Crotonsäure
VPS: Vinylphosphonsäure
VPE: Vinylphosphonsäurehalbester
AMPS: 2-Acrylamido-2-methyl-propansulfonsäure
AMPP: 2-Acrylamido-2-methyl-propanphosphonsäure
AM: Acrylamid

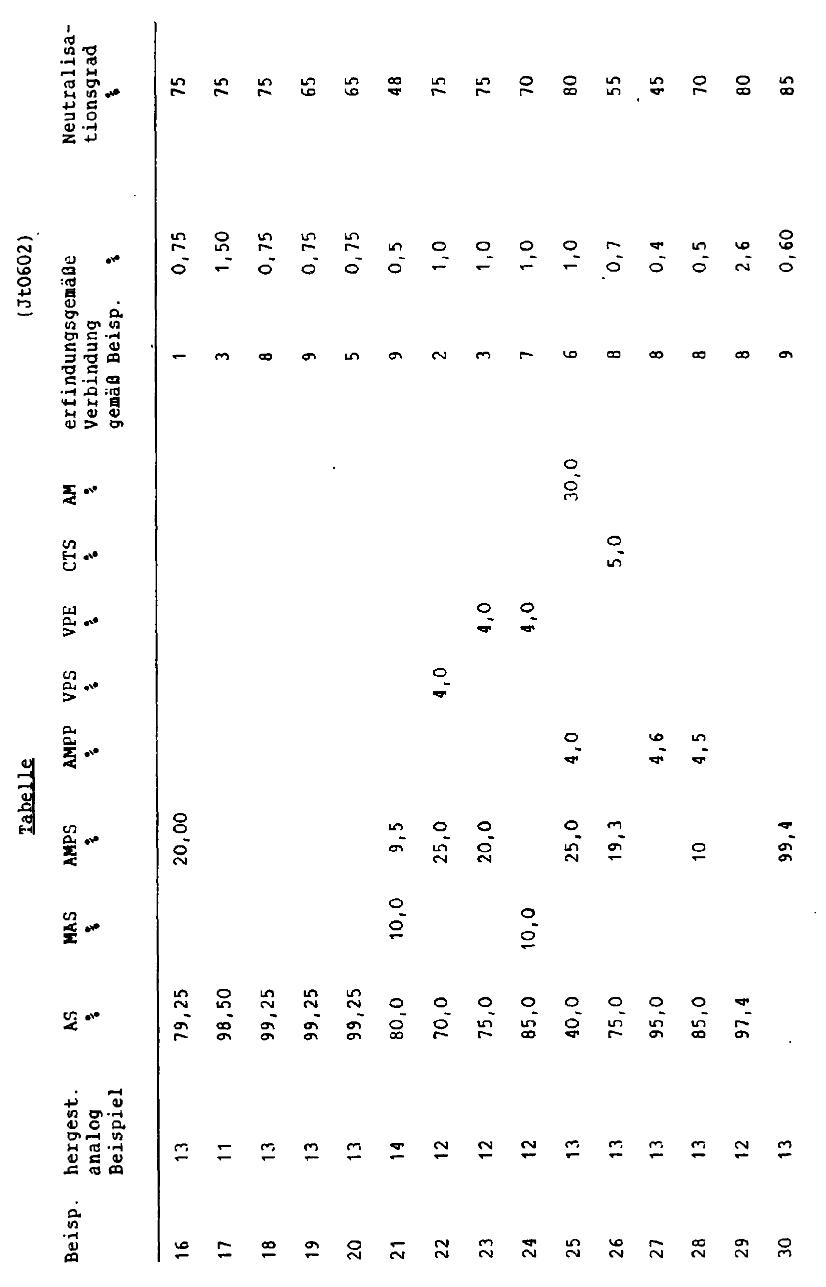

## Patentansprüche

1. Durch Copolymerisation hydrophiler Monomere herstellbare wasserquellbare Hydrogele, dadurch gekennzeichnet, daß bei der Copolymerisation Verbindungen der allgemeinen Formel 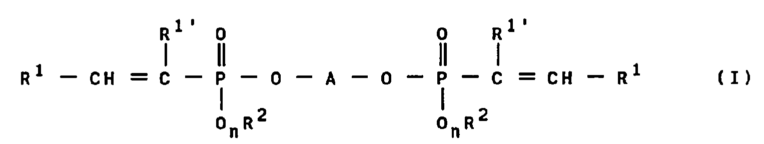 worin
R¹ und R¹' unabhängig voneinander Wasserstoff oder (C₁-C₄)-Alkyl,
R² (C₁-C₄)-Alkyl,
n 0 oder 1 und
A geradkettiges oder verzweigtes (C₂-C₁₂)-Alkylen, oder eine Gruppe der Formel II 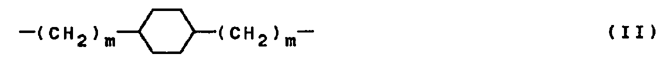 worin m 0 oder 1 ist,
oder eine Gruppe der Formel III 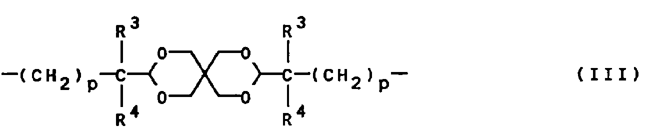 worin R³ und R⁴ unabhängig voneinander (C₁-C₄)-Alkyl bedeuten und p 0 oder 1 ist, oder eine Gruppe der Formel IV 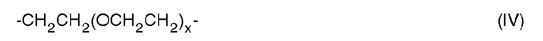 worin x 1 bis 12 ist, oder eine Gruppe der Formel V 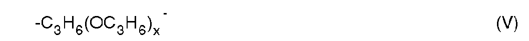 worin x 1 bis 12 ist,
oder eine Gruppe der Formel VI 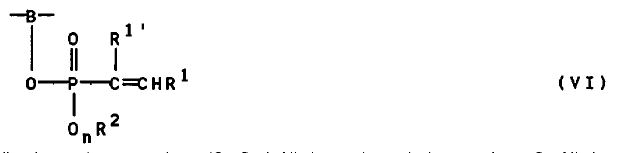 worin B für geradkettiges oder verzweigtes (C₃-C₁₂)-Alkylen steht, wobei verzweigtes C₆-Alkylen ausgeschlossen ist, falls R¹ und R¹' für Wasserstoff stehen und worin R¹, R¹', R² und n wie oben angegeben definiert sind, bedeuten, als Vernetzer eingesetzt werden.

2. Wasserquellbare Hydrogele gemäß Anspruch 1, dadurch gekennzeichnet, daß bei der Copolymerisation als hydrophile Monomere Acrylsäure, Methacrylsäure, Crotonsäure, 2-Acrylamido-2-methylpropansulfonsäure und -phosphonsäure, Vinylphosphonsäure, Vinylphosphonsäurehalbester, deren Salze, Acrylamid, N-Vinylamide oder Gemische davon eingesetzt werden.

3. Wasserquellbare Hydrogele gemäß Anspruch 2, dadurch gekennzeichnet, daß bei der Copolymerisation als hydrophiles Monomer Acrylsäure und/oder deren Salze eingesetzt werden.

4. Verwendung der Verbindungen der allgemeinen Formel 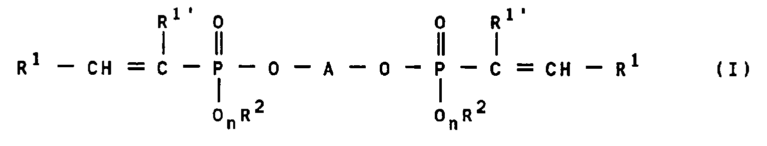 worin
R¹ und R¹' unabhängig voneinander Wasserstoff oder (C₁-C₄)-Alkyl,
R² (C₁-C₄)-Alkyl,
n 0 oder 1 und
A geradkettiges oder verzweigtes (C₂-C₁₂)-Alkylen, oder eine Gruppe der Formel II 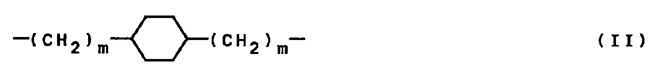 worin m 0 oder 1 ist,
oder eine Gruppe der Formel III 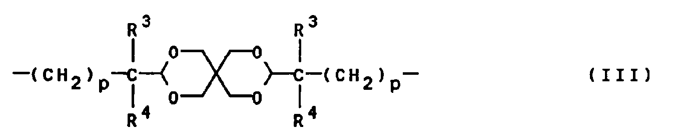 worin R³ und R⁴ unabhängig voneinander (C₁-C₄)-Alkyl bedeuten und p 0 oder 1 ist, oder eine Gruppe der Formel IV 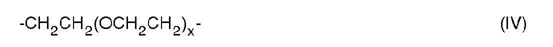 worin x 1 bis 12 ist, oder eine Gruppe der Formel V 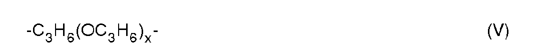 worin x 1 bis 12 ist,
oder eine Gruppe der Formel VI 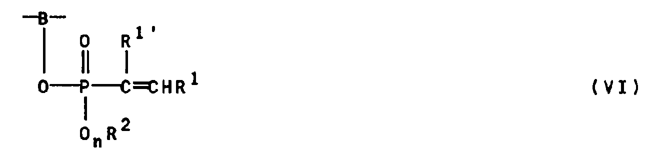 worin B für geradkettiges oder verzweigtes (C₃-C₁₂)-Alkylen steht, wobei verzweigtes C₆-Alkylen ausgeschlossen ist, falls R¹ und R¹' für Wasserstoff stehen und worin R¹, R¹', R² und n wie oben angegeben definiert sind, bedeuten, als Vernetzer bei der Synthese von Polymeren aus ungesättigten Monomeren.

5. Verbindungen der allgemeinen Formel I 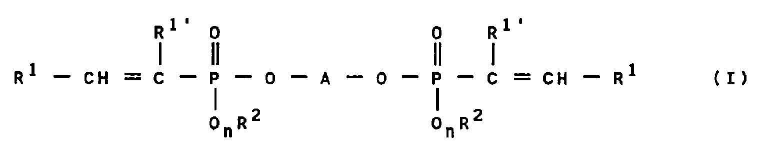 worin
R¹ und R¹' unabhängig voneinander Wasserstoff oder (C₁-C₄)-Alkyl,
R² (C₁-C₄)-Alkyl,
n 0 oder 1 und
A eine Gruppe der Formel IV 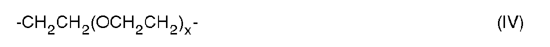 worin x 1 bis 12 ist,
oder eine Gruppe der Formel V 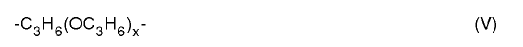 worin x 1 bis 12 ist, bedeuten

6. Verbindungen gemäß Anspruch 5, dadurch gekennzeichnet, daß R¹ und R¹' Wasserstoff oder Methyl bedeuten.

7. Verbindungen gemäß Anspruch 5 und/oder 6, dadurch gekennzeichnet, daß R² Methyl; Ethyl oder Propyl bedeutet.

8. Verbindungen gemäß einem oder mehreren der Ansprüche 5 bis 7, dadurch gekennzeichnet, daß A für die von Diethylenglykol, Triethylenglykol und Dipropylenglykol abgeleiteten Reste steht.

9. Verfahren zur Herstellung von Verbindungen der allgemeinen Formel dadurch gekennzeichnet, daß ein Alkenylphosphonsäureesterchlorid der allgemeinen Formel VII 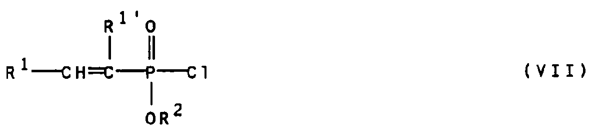 oder ein Alkenylphosphinsäurechlorid der allgemeinen Formel VIII 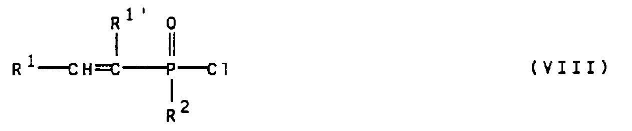 worin R¹, R¹' und R² wie in Anspruch 5 angegeben definiert sind, mit einem Alkohol der allgemeinen Formel IX
HO-A-OH (IX)
worin A wie in Anspruch 5 angegeben definiert ist, umgesetzt wird.

## Claims

1. Hydrogels preparable by copolymerization of hydrophilic monomers, characterized in that the copolymerization compounds of the general formula I 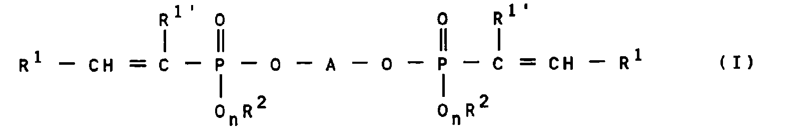 in which
R¹ and R¹', independently of one another, are hydrogen or (C₁-C₄) -alkyl,
R² is (C₁-C₄)-alkyl,
n is 0 or 1 and
A is straight-chain or branched (C₂-C₁₂)-alkylene or a group of the formula II 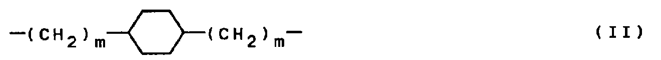 in which m is 0 or 1,
or a group of the formula I II 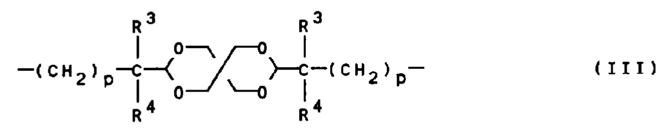 in which R³ and R⁴, independently of one another, are (C₁-C₄)alkyl and p is 0 or 1 or a group of the formula IV 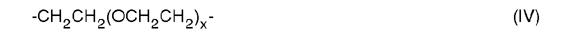 in which x is 1 to 12
or a group of the formula V 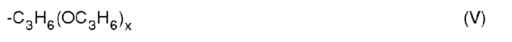 in which x is 1 to 12
or a group of the formula VI 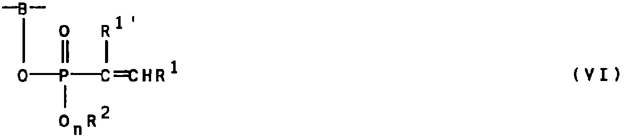 in which B represents straight-chain or branched (C₃-C₁₂)-alkylene, branched C₆-alkylene being excluded if R¹ and R¹' denote hydrogen, and in which R¹, R¹', R² and n are as defined above, are used as cross-linking agents.

2. Water-swellable hydrogels according to Claim 1, characterized in that the hydrophilic monomers used in the copolymerization are acrylic acid, methacrylic acid, crotonic acid, 2-acrylamido-2-methylpropane-sulphonic acid and -phosphonic acid, vinylphosphonic acid, semiesters of vinylphosphonic acid, salts thereof, acrylamide, N-vinyla- mides, or mixtures thereof.

3. Water-swellable hydrogels according to Claim 2, characterized in that the hydrophilic monomer used in the copolymerization is acrylic acid and/or salts thereof.

4. Use of the Compounds of the general formula I 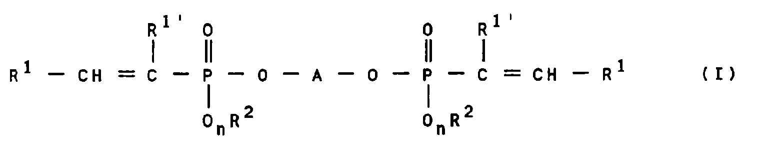 in which
R¹ and R¹', independently of one another, are hydrogen or (C₁-C₄)-alkyl
R² is (Cₗ-C₄)-alkyl,
n is 0 or 1 and
A is straight-chain or branched (C₂-C₁₂)-alkylene or a group of the formula II 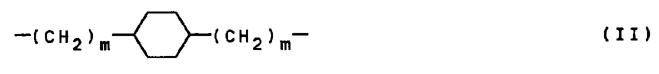 in which m is 0 or 1,
or a group of the formula I II 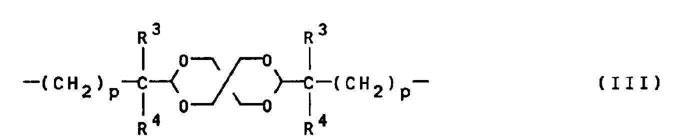 in which R³ and R⁴, independently of one another, are (C₁-C₄)alkyl and p is 0 or 1
or a group of the formula IV 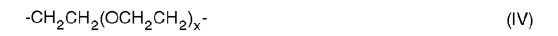 in which x is 1 to 12
or a group of the formula V 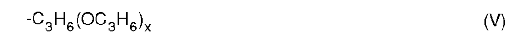 in which x is 1 to 12
or a group of the formula VI 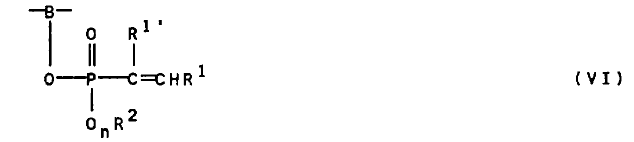 in which B represents straight-chain or branched (C₃-C₁₂)-alkylene, branched C₆-alkylene being excluded, if R¹ and R¹' denote hydrogen, and in which R¹, R¹', R² and n are as defined above, as cross-linking agents in the synthesis of polymers from unsaturated monomers.

5. Compounds of the general formula I 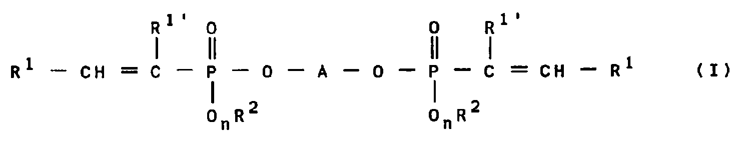 in which
R¹ and R¹', independently of one another, are hydrogen or (C₁-C₄)-alkyl, R² is (C₁-C₄)-alkyl,
n is 0 or 1 and
A is a group of the formula IV 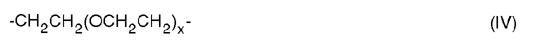 in which x is 1 to 12
or a group of the formula V 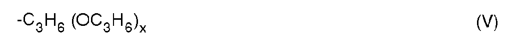 in which x is 1 to 12

6. Compounds according to Claim 5, characterized in that R¹ and R¹' are hydrogen or methyl.

7. Compounds according to Claim 5 and/or 6 characterized in that R² is methyl, ethyl or propyl.

8. Compounds according to one or more of Claims 5 to 7, characterized in that A represents the radicals derived from diethylene glycol, triethylene glycol and dipropylene glycol.

9. Process for preparing compounds of the general formula I, characterized in that an alkenyl phosphonic acid ester chloride of the general formula VII 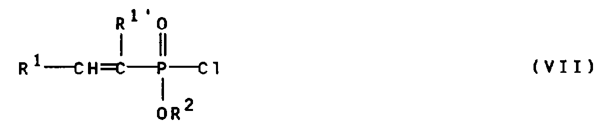 or an alkenyl phosphinic acid chloride of the general formula VIII 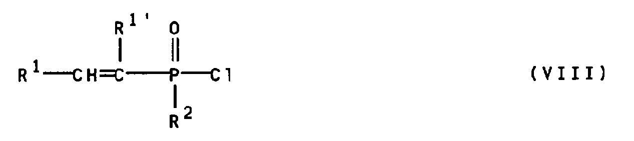 in which R¹, R¹' und R² are as defined in Claim 5, is reacted with an alcohol of the general formula IX 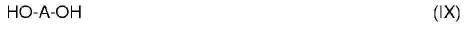 in which A is as detined in Claim 5.

## Revendications

1. Hydrogels gonflables à l'eau que l'on peut préparer par copolymérisation de monoméres hydrophiles, caractérisés en ce que dans la copolymérisation de composés de formule générale I 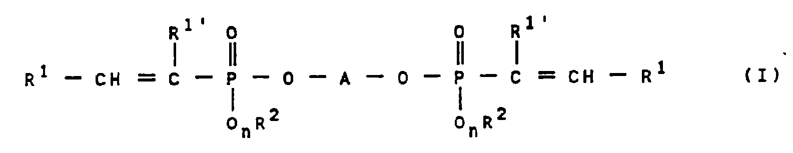 dans laquelle
R¹ et R¹'; indépendamment l'un de l'autre, représentent l'hydrogène ou un alkyle en (C₁-C₄),
R₂ représente un alkyle en (C₁-C₄),
n vaut 0 ou 1 et
A représente un alkylène en (C₂-C₁₂) linéaire ou ramifié, ou un groupe de formule Il 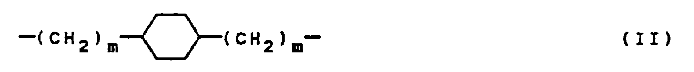 dans laquelle m vaut 0 ou 1,
ou un groupe de formule III 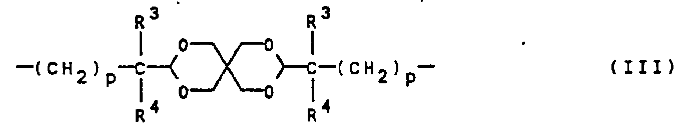 dans laquelle
R³ et R⁴, indépendamment l'un de l'autre, représentent un alkyle en (C₁-C₄), et p vaut 0 ou 1,
ou un groupe de formule IV 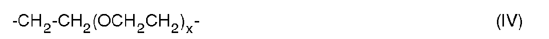
dans laquelle x va de 1 à 12,
ou un groupe de formule V 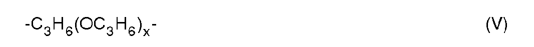 dans laquelle x va de 1 à 12,
ou un groupe de formule VI 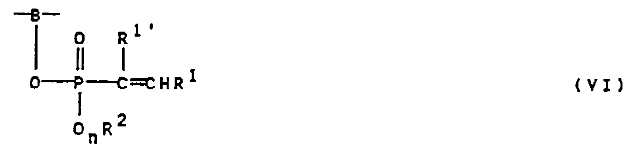 dans laquelle B représente un alkylène en (C₃-C₁₂) linéaire ou ramifié, l'alkyléne en Cₛ ramifié étant exclu, dans la cas où R¹ et R¹' représentent l'hydrogène et où R¹, R¹'; R² et n sont définis comme ci-dessus, ils sont utilisés comme agents réticulants.

2. Hydrogels gonflables à l'eau selon la revendication 1, caractérisés en ce que dans la copolymérisation on utilise comme monomères hydrophiles l'acide acrylique, l'acide méthacrylique, l'acide crotonique, l'acide 2-acryla- mido-2-méthylpropane-sulfonique et -phosphonique, l'acide vinylphosphonique, les hémi-esters de l'acide vinylphosphonique, leurs sels, l'acrylamide, le N-vinylamide ou leurs mélanges.

3. Hydrogels gonflables à l'eau selon la revendication 2, caractérisés en ce qu'on utilise dans la copolymérisation comme monomère hydrophile l'acide acrylique et/ou ses sels.

4. Utilisation des composés de formule générale I 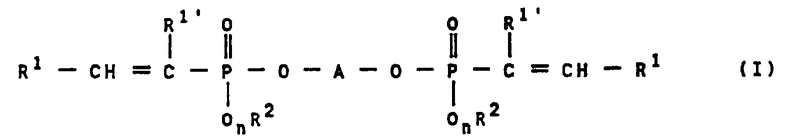 dans laquelle
R¹ et R¹'; indépendamment l'un de l'autre, représentent l'hydrogène ou un alkyle en (C₁-C₄),
_{R}2 représente un alkyle en (C₁-C₄),
n vaut 0 ou 1 et
A représente un alkylène en (C₂-C₁₂) linéaire ou ramifié, ou un groupe de formule Il 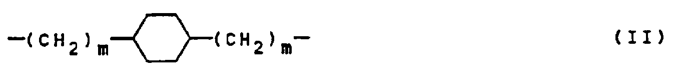 dans laquelle m vaut 0 ou 1,
ou un groupe de formule III 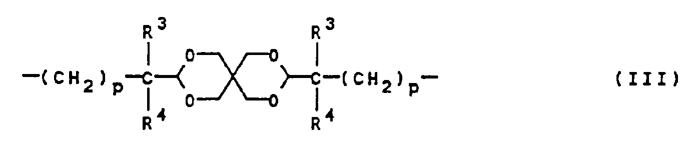 dans laquelle
R³ et R⁴, indépendamment l'un de l'autre, représentent un alkyle en (C₁-C₄), et p vaut 0 ou 1,
ou un groupe de formule IV 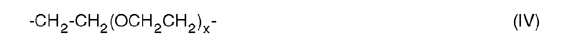 dans laquelle x va de 1 à 12,
ou un groupe de formule V 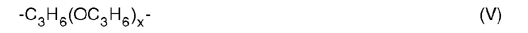 dans laquelle x va de 1 à 12,
ou un groupe de formule VI 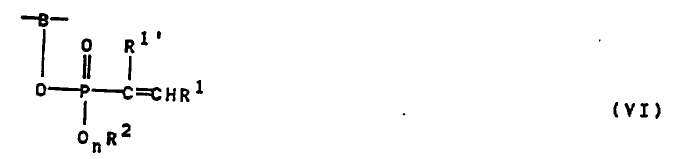 dans laquelle B représente un alkylène en (C₃-C₁₂) linéaire ou ramifié, l'alkylène en C₆ ramifié étant exclu, dans la cas où R¹ et R¹' représentent l'hydrogène et où R^{l}, R¹', R² et n sont définis comme ci-dessus, comme agents réticulants dans la synthèse de polymères à partir de monomères insaturés.

5. Composés de formule générale I 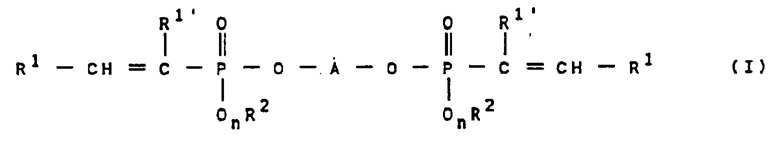 dans laquelle
R¹ et R¹'; indépendamment l'un de l'autre représentent l'hydrogène ou un alkyle en (C₁-C₄),
_{R}² représente un alkyle en (C₁-C₄),
n vaut 0 ou 1 et
A représente un groupe de formule IV 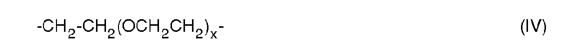 dans laquelle x va de 1 à 12,
ou un groupe de formule V 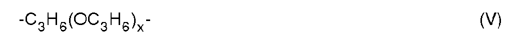 dans laquelle x va de 1 à 12.

6. Composés selon la revendication 5, caractérisés en ce que R¹ et R¹' représentent l'hydrogène ou le méthyle.

7. Composés selon la revendication 5 et/ou 6, caractérisés en ce que R² représente le méthyle, l'éthyle ou le propyle.

8. Composés selon une ou plusieurs des revendications 5 à 7, caractérisés en ce que A représente des radicaux dérivés du diéthylène-glycol, du triéthyléne-glycol et du dipropylène-glycol.

9. Procédé pour la préparation de composés de formule générale I caractérisé en ce qu'on fait réagir un chlorure d'ester d'acide alcénylphosphonique de formule générale VII 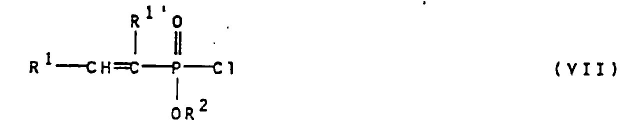 ou un chlorure d'acide alcénylphosphonique de formule générale VIII 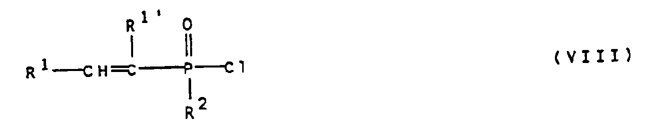 dans laquelle R¹, R¹' et R² sont définis comme dans la revendication 5, avec un alcool de formule générale IX
HO-A-OH (IX)
dans laquelle A est défini comme donnée dans la revendication 5.
